# EUROPEAN PATENT APPLICATION

(11) **EP 1 432 097 A1**
(43) Date of publication of application: **23.06.2004**
(21) Application number: 03022648.4
(22) Date of filing: 06.10.2003
(51) Int. Cl.: H02J 7/02

(54) **Charging apparatus and method for contactless charging of a mobile unit**

(71) Applicant: SIEMENS AKTIENGESELLSCHAFT, 80333 München (DE)
(72) Inventor: Bendixen, Carsten, 9210 Aalborg SO (DK)

(57) **Abstract**

A charging apparatus (600) for contactless charging of a mobile unit (102), the charging apparatus (600) comprising a primary inductance (208) and monitoring means (628) for measuring duration of pulses of a current through the primary inductance (208).

## Description

### Field of the invention:

The present invention relates to contactless or inductive charging systems.

### Background for the invention:

The use of contactless or inductive charging systems is gaining market acceptance for small battery operated devices, such as electrical toothbrushes, cordless telephones and medical equipment. One of the advantages of contactless charging is that there is no need for electrical contact surfaces which may be subject to wear and dirt, allowing the product to be made dust proof. Another advantage is that products may have no openings in the enclosure, allowing the products to be made waterproof.

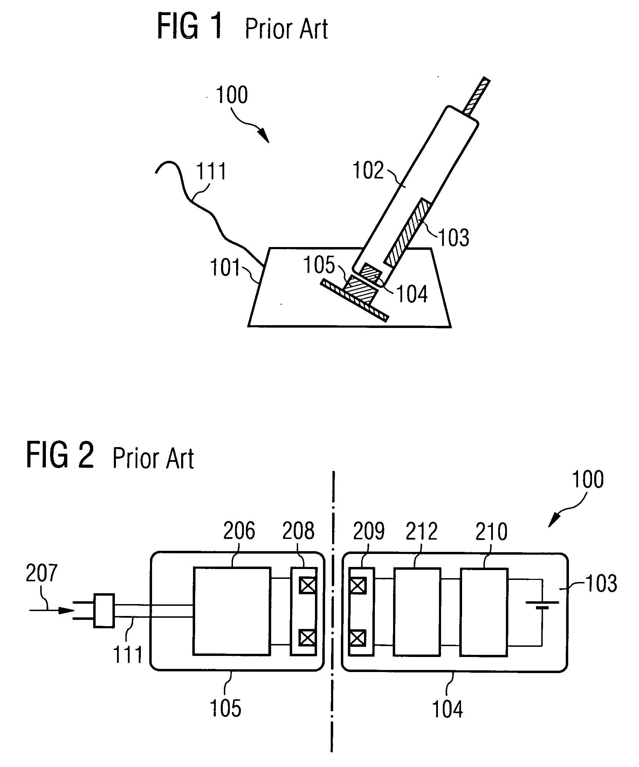

Known contactless charging systems are shown in Figures 1, 2 and 3. A disadvantage of such types of charging systems is that they will try to transfer energy to anything which is situated in the near vicinity of the magnetic field. For example, a coin, paperclip, or any other conductive object by accident placed in the cavity wherein the mobile device is normally charged can act as a secondary winding. This means that large currents flow in the object, leading to heating, eventually causing serious burns and damages to the housing of the device covering the charger, and/or burns to human hands which touch the conductive object.

### Summary of the invention

It is an object of the present invention to avoid the above mentioned disadvantages, i.e. to reduce the risk of inducing current to an object accidentally set on an inductive charger.

This object can be achieved by a charging apparatus according to claim 1 and a method according to claim 10. A charging apparatus for contactless charging of a mobile unit according to the present invention comprises a primary inductance and an monitor for measuring a duration of pulses of a current through the primary inductance.

In a preferred embodiment of the invention the charging apparatus comprises a power control for reducing or stopping the current through the primary inductance for at least a predefined pausing time T2 if the duration a pulse of the current through the primary inductance or a predetermined number of pulse of the current through the primary inductance exceeds a predefined time T1.

In a further preferred embodiment of the invention, the predefined pausing time T2 is greater than the predefined time T1. The order of magnitude of the predefined pausing time T2 is preferably one more than the order of magnitude of the predefined time T1. In a further preferred embodiment of the invention, the order of magnitude of the predefined pausing time T2 is preferably two more than the order of magnitude of the predefined time T1.

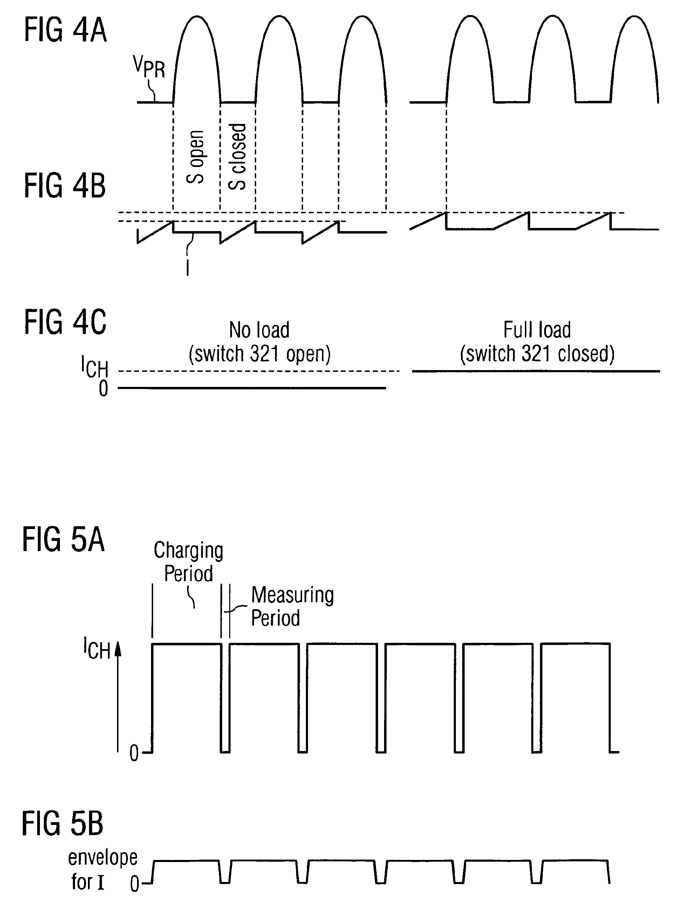

The invention is particularly suitable for so-called open loop charging schemes. An open-loop charging scheme divides the charging time in a series of consecutive alternating periods, as indicated in Figures 5a and 5b. In the charging period which is typically some hundred milliseconds, a constant current is applied to the battery. The charging period is interrupted by a measuring or evaluation period of just a few milliseconds, where the charge current is interrupted and the voltage and temperature are measured. Thus, the effects of internal resistance of the battery, which can lead to false charge terminations, can be eliminated, since only the open-circuit battery voltage is measured.

The dependent claims describe various aspects of the invention.

### Description of the Figures

The preferred embodiments and aspects of the present invention are discussed in more detail in the detailed description referring to examples shown in Figures 5 to 7f in the accompanying drawings of which:
- Figure 1: illustrates a contactless charging unit;
- Figure 2: illustrates a schematic diagram for a contactless charging unit as shown in Figure 1;
- Figure 3: illustrates a schematic diagram for a contactless charging unit;
- Figures 4a, b and c: illustrate voltages and currents during no-load and full-load situations;
- Figures 5a and b: illustrate a charge current profile during open-loop charging according to an embodiment of the present invention;
- Figure 6: illustrates a schematic diagram according to an embodiment of the present invention, and
- Figures 7a through f: illustrate the internal signals of the timing unit.

Same reference signs refer to similar structural elements throughout Figures 1 to 7f.

### Detailed description

Figure 1 illustrates a contactless charger 100. The contactless charger 100 consists of a primary transmitting part 105 usually contained in a stationary unit 101, i.e. a holder placed on a table and connected to a power supply. A secondary received part 104 is contained in the mobile unit 102, i.e., the toothbrush or the cordless handset. The mobile unit 102 has a battery 103. The contactless charger 100 is connectable to mains or to any other power source via a power cable 111.

Figure 2 illustrates a schematic design of the contactless charger 100. The primary circuit 105 has a primary inductance 208, such as a coil, connected to a rectifying and smoothing circuit 206 which is connected to a power supply 207. The secondary circuit 104 has a secondary inductance 209, such as a coil or winding, connected to a resonant and rectifying circuit 212 connected to a charge control circuit 210 connected to a battery 103.

The electrical concept of contactless charging is implemented as a DC/DC converter, where a DC voltage is converted to an AC current in the primary windings of a coil. This generates a magnetic field, which is received in the secondary winding of the coil and converted back to a DC voltage with a rectifier and a filter. In a conventional DC/DC converter both coils are fixed with respect to each other. In the contactless charger, the primary and secondary coils are wound on two separate magnetic cores which are separated by an air gap. The energy is transferred from the primary coil to the secondary coil by the magnetic field which may cross the air gap, provided that the air gap is not too wide.

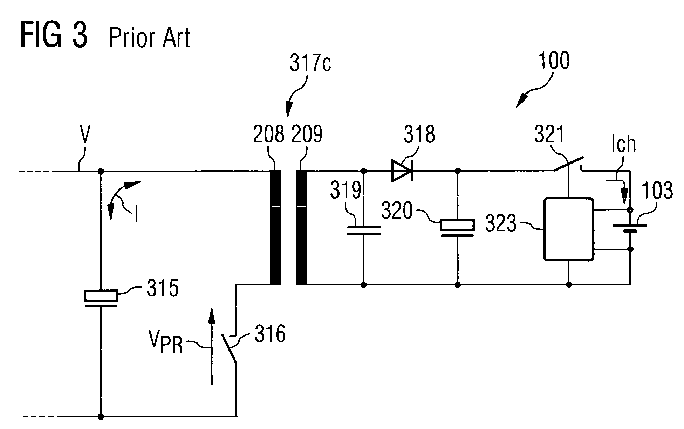

Figure 3 illustrates a simplified schematic diagram of a contactless charging system. The rectified power supply voltage V helps to generate a current I which flows to a capacitor 315 and to the primary inductance 208. By opening or closing the switch 316, the voltage V_{PR} over the primary inductance 208 can be removed or set, respectively. An air gap 317c separates the primary inductance 208 (e.g. winding or coil) and the secondary inductance 209. The secondary inductance 209 is connected in parallel with a capacitance 319. The are both connected to a diode 318 and another capacitance 320 and a switch 321. Switch 321 is connected to a charge control circuit 323 which is connected to a battery 103. The current I_{ch} flows from the switch 321 to the battery 103.

Figures 4a, b an dc, illustrate the voltages and currents during no load situations and full load situations for a resonant mode implementation of a contactless charger 100. The secondary load is reflected in the primary current. During the period where the switch 316 is closed, current builds up in the primary inductance 208. When the switch 316 is opened, the current flow is interrupted, and the voltage across the switch 316 performs a voltage swing with the period determined by the resonant frequency of the secondary inductance 209 and the resonating capacitor 319.

The peak current in the primary inductance 208 is a reflection of the state of the charger switch 321. When the switch 321 is closed, the peak current is high, and when the switch 321 is open, the peak current is low. As pointed out above, a disadvantage of such types of charging systems is that they will try to transfer energy to anything which is situated in the near vicinity of the magnetic field. A coin, a paper clip, or any other conductive object which is accidentally placed in the cavity wherein the mobile device is normally charged, acts as a secondary inductance. This means that large currents can flow into the object. This can lead to heating and eventually can cause serious burns an damage to housing of the covering device and/or burns to human hands which touch the conductive object.

The present invention avoids this by identifying changes in the secondary load being reflected back in the primary circuit, as indicated in Figures 4a, b and c. This means that it is sensed whether the secondary circuit is loaded, by measuring the current in the primary circuit. By adding a timing unit which monitors the changes in the primary circuit and which inhibits operation of the primary circuit if the secondary load is not changing according to the principles of open-loop charging described above, the problems with the unintended heating of foreign objects can be avoided.

Figures 5a and 5b illustrate the charge current profile during an open-loop charging, and the reflected primary current envelope. According to the present invention, the primary current can be used as an indication of the presence of a secondary load.

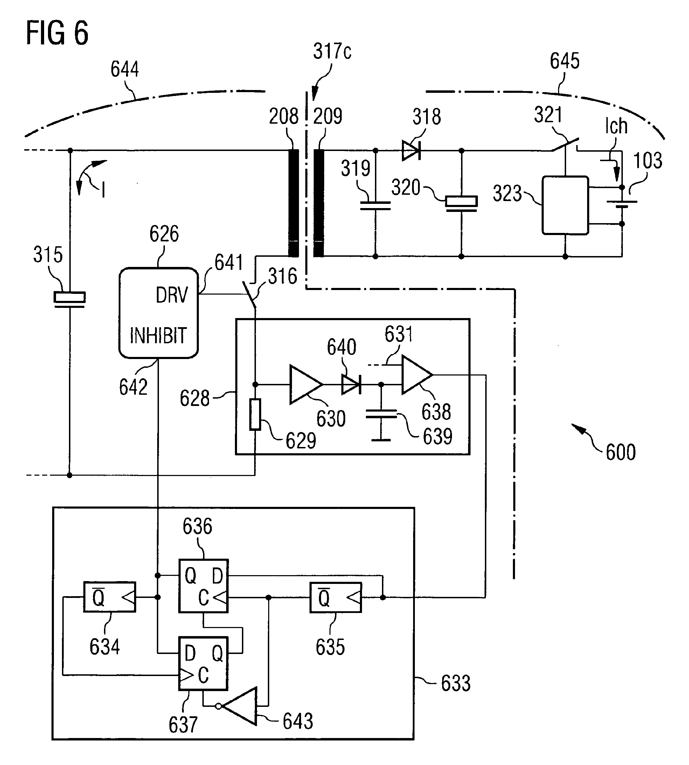

Figure 6 illustrates a charging apparatus 600 according to an aspect of the present invention. The contactless charging system 100 of Figure 3 is extended with a primary current detection circuit 628, a timing unit 633, and a power controller which is implemented as a DC/DC converter control circuit 626 containing an inhibit input 642.

The primary current detection unit 628 and the timing unit 633 provide monitoring means for measuring duration of pulses of the current through the primary inductance 208. The detection circuit 628 measures the peak currents across the current sense resistor 629. The resulting voltage is amplified in amplifier 630 and peak detected is converted to a logical signal in the comparator 638.

The output from the primary current detection circuit 628 is input to the timing unit 633. The timing unit 633 comprises a retriggerable oneshot circuit 635 connected to flip-flop circuit 636 and inverter 643. The timing unit 633 further comprises a second retriggerable oneshot circuit 634 which is connected to the DC/DC converter control circuit 626, to the flip-flop circuit 636, and to flip-flop circuit 637. The retriggerable oneshot circuit 635 is connected to the flip-flop circuit 637 via inverter 643.

A retriggerable oneshot circuit is a mono-stable circuit. Its output has a stable level (e.g. "high") if there is no clock input signal present. If there is a clock input signal present, the clock input signal having a shorter period than the predefined time of the retriggerable oneshot circuit, the output will be stable with the opposite level (i.e "low").

In the primary circuit 644, the rectified power supply voltage helps generate current I which flows to a capacitor 315 and to a primary inductance 208, i.e., to the primary coil or winding. A switch 316 is connected to the primary inductance 208, the DC/DC converter control circuit 626 having an output 641 and input 642, and the detector circuit 628. The detector circuit 628 contains a resistor 629 connected to an amplifier 630 connected to a diode 640, connected to a comparator 638 and a capacitor 639. The comparator 638 is connected to the timing unit 633. The comparator 638 compares the peak current value to a predefined reference 631.

The secondary circuit 645 is separated from the primary circuit 644 by an air gap 317c. In the secondary circuit 645, the secondary inductance 209 is connected in parallel to capacitor 319. They are both connected to diode 318 and another capacitance 320 and a switch 321. The switch 321 is connected to a charge control circuit 323 which is connected to the battery 103. The current I_{ch} flows from the switch 321 to the battery 103.

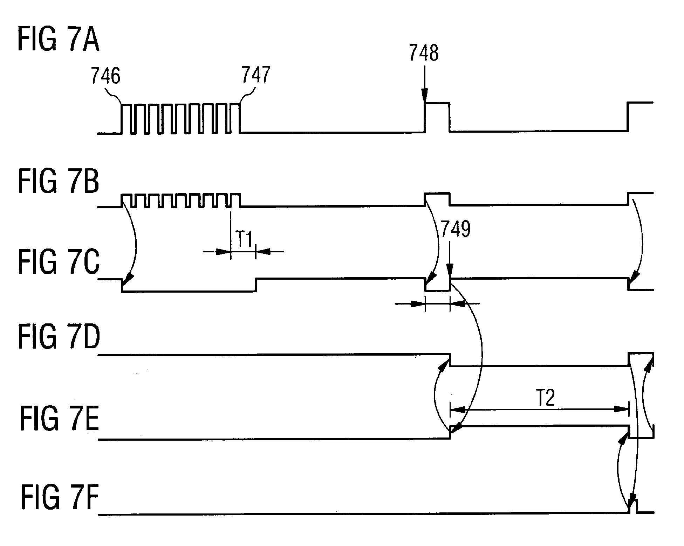

Figures 7a to 7f illustrate the internal signals of the timing unit 633. At 746 the secondary unit is placed in the charger; at 747 the secondary unit is removed from the charger; and at 748 an "illegal" object is placed into the charger.

When a secondary unit is inserted in the primary unit, the charge control circuit will start the open loop charge procedure. The current pulses from the battery charge results in a series of pulses on the output of the detector circuit 628. Those pulses trigger the retriggerable oneshot circuitry 635. Because the oneshot 635 is retriggerable, the output will stay low as long as pulses with a period shorter than the time T1 of retriggerable oneshot circuitry 635 are received on the input. The inhibit input 642 of the DC/DC converter 628 stays low and operation is allowed.

When an "illegal" object is placed in the primary unit, this again is detected in the detector circuit. However, since no pulsating of the load occurs, the retriggerable oneshot circuitry 635 is not retriggered, hence the output makes a low to high transition after a predefined time T1 at 749. This sets flip-flop 636 which again inhibits oparation of the primary circuit 644. This situation also triggers the retriggerable oneshot circuitry 634. The retriggerable oneshot circuit 634 determines the time the DC/DC converter 626 stays inactive. Upon timeout of the oneshot circuitry 634 after the predefined pausing time T2 (T2>>T1), flip-flop 637 is set, which clears the inhibit input of the DC/DC converter control circuit 626. Hence, the illegal load only receives a series of short bursts of current, which effectively limits the power dissipated in the object.

Figure 6 is only one embodiment of the timing unit 633. The principles used are in no way limited to a certain kind of implementation of the DC/DC converter circuit. The principles are also not restricted to a simple embodiment of the detection circuits 628 and timing unit 633.

In short, the present invention addresses measuring the secondary load in the primary circuit; ensuring that only a load which toggles between a full load state an a no/low load state at a predetermined rate, are allowed to receive full power; and ensuring that loads which do not toggle at a predetermined rate are not allowed to receive full power. Various embodiments within the scope of the present invention are possible. These and other variations are intended to be part of the present invention. The skilled person understands that with the term "contactlessly" in "contactlessly charging a mobile unit" it is means that there may be a mechanical contact but that the transfer of energy takes place by inductance between the primary and secondary inductances 208, 209.

## Claims

1. A charging apparatus (600) for contactless charging of a mobile unit (102), the charging apparatus (600) comprising a primary inductance (208),
**characterized in that**:
the charging apparatus (600) comprises a monitoring means (628) for measuring duration of current pulses through the primary inductance (208).

2. A charging apparatus (600) according to claim 1,
**characterized in that**:
said charging apparatus (600) comprises a power controller (626) for reducing or stopping the current through the primary inductance (208) for at least a predefined pausing time (T2) if the duration a pulse of the current through the primary inductance (208) or a predetermined number of pulse of the current through the primary inductance (208) exceeds a predefined time (T1).

3. A charging apparatus (600) according to claim 2,
**characterized in that**:
said predefined pausing time (T2) is greater than the predefined time (T1).

4. A charging apparatus (600) according to claim 1, 2 or 3,
**characterized in that**:
the monitoring means (628) comprises a primary current detection circuit (628) for providing a signal during the duration of a pulse of the current through the primary inductance (208).

5. A charging apparatus (600) according to claim 4,
**characterized in that**:
the monitoring means (628) further comprises a timing unit (633) for determining the duration of the signal provided by the primary current detection circuits (628).

6. A charging apparatus (600) according to claim 5,
**characterized in that**:
said timing unit (633) comprises a first retriggerable oneshot circuit (635), the first retriggerable oneshot circuit (635) connected to first flip-flop (636) and an inverter (643), and a second retriggerable oneshot circuit (634) connected to a second flip-flop circuit (637) and to the first flip-flop circuit (636).

7. A charging apparatus (600) according to claim 6,
wherein:
said power controller (626) comprises: an output (641) connected to a primary circuit switch (316) connected to the primary current detection circuit (628) and an input (642) connected to the timing unit (633), the power controller (626) input (642) further being connected to the second oneshot circuit (634) and to the first flip-flop circuit (636).

8. A charging apparatus (600) according to any one of the claims 4 to 7,
**characterized in that**:
the primary current detection circuit (629) comprises a primary resistor (629) connected to a current detection amplifier (630), the current detection amplifier (630) being connected to a diode (640), the diode (640) being connected to a comparator (638) and a grounded capacitor (639).

9. A charging apparatus (600) according to any one of the preceding claims,
**characterized in that**:
the comparator (638) of the primary current detection circuit (628) is connected to the first oneshot circuit (635) and the first flip-flop circuit (636) of the timing unit (633).

10. A method for contactlessly charging a mobile unit (102) with a current obtained from a charging apparatus (600) comprising a primary inductance (208), the method comprising the steps of:
measuring a duration of current pulses passing the primary inductance (208); and
in response to measuring said duration, reducing the current passed to a primary inductance if the duration exceeds a predefined time (T1).

11. A method according to claim 10, wherein:
the current is reduced or stopped for at least a predefined pausing time (T2) if the duration of a current pulse through the primary inductance (208) exceeds a predefined time (T1); or if a predetermined number of current pulses through the primary inductance (208) exceeds a predefined threshold value.
